# FASCICULE DE BREVET EUROPEEN

(11) **EP 2 533 986 B1**
(45) Date de publication et mention de la délivrance du brevet: **03.09.2014**
(21) Numéro de dépôt: 11702214.5
(22) Date de dépôt: 04.02.2011
(51) Int. Cl.: B60C 11/12

(54) **PNEUMATIQUE POUR VEHICULES A DEUX ROUES COMPORTANT UNE BANDE DE ROULEMENT PRESENTANT UNE DECOUPE CIRCONFERENTIELLEMENT CONTINUE**
REIFEN FÜR ZWEIRÄDRIGE FAHRZEUGE MIT EINEM PROFIL MIT UMLAUFEND DURCHGEHENDER RILLE
TIRE FOR TWO-WHEELED VEHICLES, COMPRISING A TREAD HAVING A CIRCUMFERENTIALLY CONTINUOUS GROOVE

(30) Priorité: 12.02.2010 FR 1050991
(43) Date de publication de la demande: 19.12.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: BESTGEN, Luc, F-63140 Chatel-Guyon (FR)
(74) Mandataire: Le Cam, Stéphane Georges Elie
(86) Numéro de dépôt international: PCT/EP2011/051635
(87) Numéro de publication internationale: WO 2011/098404

(56) Documents cités:
- WO-A1-2004/018236
- WO-A1-2008/149611
- DE-A1- 2 536 470
- DE-U1-202008 008 298
- FR-A- 1 568 434
- GB-A- 2 056 925

## Description

L'invention concerne un pneumatique destiné à équiper un véhicule et plus particulièrement destiné à équiper un véhicule à deux roues tel qu'une motocyclette et plus spécifiquement encore un pneumatique destiné à équiper une motocyclette d'indice de vitesse supérieur à W qui correspond à une vitesse 270 km/h.

Bien que non limité à une telle application, l'invention sera plus particulièrement décrite en référence à un tel pneumatique de motocyclette, ou moto.

Comme dans le cas de tous les autres pneumatiques, on assiste à une radialisation des pneumatiques pour motos, l'architecture de tels pneumatiques comprenant une armature de carcasse formée d'une ou deux couches d'éléments de renforcement faisant avec la direction circonférentielle un angle pouvant être compris entre 65° et 90°, ladite armature de carcasse étant radialement surmontée d'une armature de sommet formée d'éléments de renforcement. Il subsiste toutefois des pneumatiques non radiaux auquel se rapporte également l'invention. L'invention se rapporte encore à des pneumatiques partiellement radiaux, c'est-à-dire dont les éléments de renforcement de l'armature de carcasse sont radiaux sur au moins une partie de ladite armature de carcasse, par exemple dans la partie correspondant au sommet du pneumatique.

De nombreuses architectures d'armature de sommet ont été proposées, selon que le pneumatique sera destiné à la monte à l'avant de la moto ou à la monte à l'arrière. Une première structure consiste, pour ladite armature de sommet, à employer uniquement des câbles circonférentiels, et ladite structure est plus particulièrement employée pour la position arrière. Une deuxième structure, directement inspirée des structures couramment employées en pneumatiques pour véhicules de Tourisme, a été utilisée pour améliorer la résistance à l'usure, et consiste dans l'utilisation d'au moins deux couches de sommet de travail d'éléments de renforcement sensiblement parallèles entre eux dans chaque couche mais croisés d'une couche à la suivante en faisant avec la direction circonférentielle des angles aigus, de tels pneumatiques étant plus particulièrement adaptés pour l'avant des motos. Les dites deux couches de sommet de travail peuvent être associées à au moins une couche d'éléments circonférentiels, généralement obtenus par enroulement hélicoïdal d'une bandelette d'au moins un élément de renforcement enrobé de caoutchouc.

Le choix des architectures de sommet des pneumatiques intervient directement sur certaines propriétés des pneumatiques telles que l'usure, l'endurance, l'adhérence ou bien encore le confort en roulage ou dans les cas notamment des motocyclettes la stabilité. Toutefois d'autres paramètres des pneumatiques tels que la nature des mélanges caoutchouteux constituant la bande de roulement interviennent également sur les propriétés dudit pneumatique. Le choix et la nature des mélanges caoutchouteux constituant la bande de roulement sont par exemple des paramètres essentiels concernant les propriétés d'usure. Le choix et la nature des mélanges caoutchouteux constituant la bande de roulement interviennent également sur les propriétés d'adhérence du pneumatique.

Un pneumatique destiné à équiper un véhicule à deux roues est divulgué dans le document WO-A-2004018236.

Il est encore connu pour d'autres types de pneumatiques de réaliser des bandes de roulement comportant des incisions plus particulièrement pour des pneumatiques destinés à rouler sur des sols enneigés, verglacés, ou mouillés.

De telles bandes de roulement sont habituellement pourvue d'éléments en reliefs de type nervures ou blocs, séparés les uns des autres dans le sens circonférentiel et/ou dans le sens transversal par des rainures transversales et/ou circonférentielles. Ces bandes de roulement comportent alors en outre des incisions ou fentes, dont les largeurs non nulles sont très inférieures à celles des rainures précédemment citées. En réalisant une pluralité de découpes débouchant sur la surface de roulement, on crée une pluralité d'arêtes de gomme pour couper la couche d'eau éventuellement présente sur la route, de manière à maintenir le pneumatique en contact avec le sol et à créer des cavités formant éventuellement des conduits destinés à recueillir et à évacuer l'eau présente dans la zone de contact du pneumatique avec la route dès lors qu'elles sont disposées de façon à déboucher en dehors de la zone de contact.

De nombreux types d'incisions ont déjà été proposés en vue d'améliorer l'adhérence du pneumatique sur les sols considérés.

Le document FR 2 418 719 décrit par exemple des incisions qui peuvent être normales à la surface de la bande de roulement ou inclinées par rapport à la direction perpendiculaire à ladite surface.

Le document FR 791 250 décrit des incisions présentant un tracé ondulé sur la surface de la bande de roulement.

Les performances des motocyclettes conduisent aujourd'hui à vouloir mieux maîtriser les passages de couples notamment moteurs pour ce qui concerne la roue arrière et freineurs pour ce qui concerne la roue avant.

Comme énoncé précédemment, l'architecture de l'armature sommet du pneumatique ou bien la nature des mélanges caoutchouteux de la bande de roulement peuvent permettre d'obtenir de tels effets.

Les passages de couples sont également fonction de la surface de contact avec le sol. Or les courbures particulièrement prononcées notamment selon la direction axiale des pneumatiques pour motocyclettes ne facilitent pas la mise à plat en roulage ligne droite du pneumatique. Il apparaît une mise en compression de la bande de roulement qui limite effectivement l'aire de la surface de contact avec le sol et en outre conduit à des pertes énergétiques.

Il a déjà été proposé des sillons circonférentiels pour limiter cette mise en compression de la bande de roulement. Le résultat est satisfaisant d'un point de vue énergétique. Par contre l'absence de mélange caoutchouteux correspondant aux sillons diminue la surface du pneumatique au contact du sol dans l'aire de contact et donc limite les efforts que l'on peut transmettre lors d'un freinage notamment pour le pneumatique avant ou lors d'une accélération pour le pneumatique arrière.

L'invention a ainsi pour but de fournir un pneumatique pour motocyclette dont les propriétés en terme de passage de couples ou transmission d'efforts vers le sol sont améliorées.

Ce but a été atteint selon l'invention par un pneumatique pour véhicule motorisé à deux roues, selon la revendication 1, comportant une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, au moins la partie centrale de la bande de roulement comportant au moins une découpe continue circonférentiellement et ladite découpe continue circonférentiellement étant formée pour au moins 80 % de sa longueur d'au moins une incision et d'au plus 20% d'au moins une partie présentant une largeur supérieure à celle d'une incision et la surface apparente de ladite au moins une incision étant supérieure à la surface apparente de ladite au moins une partie présentant une largeur supérieure à celle d'une incision.

De préférence, la découpe continue circonférentiellement est formée pour au moins 85 % de sa longueur d'au moins une incision.

Au sens de l'invention, une incision est une découpe formant deux parois et dont la distance entre les parois mesurée selon la normale à un plan tangent à l'une des parois est inférieure à 1.5 mm et de préférence inférieure à 1 mm. Ladite distance au niveau de la surface de la bande de roulement est au moins égale à ladite distance au niveau du fond de l'incision, c'est-à-dire le niveau le plus éloigné de la surface de la bande de roulement. Dans le cas notamment d'un pneumatique pour motocyclette, l'épaisseur de la bande de roulement étant relativement peu importante, un élargissement de ladite distance depuis la surface de la bande de roulement vers le fond de l'incision ne peut exister au risque de provoquer un affaissement des bords de l'incision au niveau de la surface de la bande de roulement et ainsi conduire à une diminution de la surface de l'aire de contact avec le sol.

Au sens de l'invention, la surface apparente d'une découpe est la surface du vide ou de la zone d'absence de matière délimitée par les parois de ladite découpe sur la surface de la bande de roulement. Elle est mesuré sur un pneumatique gonflé à la pression nominale et non chargé.

Lorsque la découpe continue circonférentiellement est formée d'au moins deux incisions, la surface apparente de ladite au moins une incision doit être comprise au sens de l'invention comme étant la somme des surfaces apparentes de chacune des incisions.

Lorsque la découpe continue circonférentiellement est formée d'au moins deux parties présentant une largeur supérieure à celle d'une incision, la surface apparente de ladite au moins une partie présentant une largeur supérieure à celle d'une incision doit être comprise au sens de l'invention comme étant la somme des surfaces apparentes de chacune desdites parties présentant une largeur supérieure à celle d'une incision.

La longueur de la découpe continue circonférentiellement est mesurée selon l'abscisse curviligne d'une paroi de ladite découpe.

La partie centrale du pneumatique est la partie correspondant au sommet du pneumatique et qui est au contact du sol lors de roulage en ligne droite.

La direction longitudinale du pneumatique, ou direction circonférentielle, est la direction correspondant à la périphérie du pneumatique et définie par la direction de roulement du pneumatique.

L'expression « continue circonférentiellement » signifie que la découpe fait le tour du pneumatique sans interruption.

La direction transversale ou axiale du pneumatique est parallèle à l'axe de rotation du pneumatique.

L'axe de rotation du pneumatique est l'axe autour duquel il tourne en utilisation normale.

Un plan circonférentiel ou plan circonférentiel de coupe est un plan perpendiculaire à l'axe de rotation du pneumatique. Le plan équatorial est le plan circonférentiel passant par le centre ou sommet de la bande de roulement et donc dans la partie centrale de la bande de roulement.

Un plan radial ou méridien contient l'axe de rotation du pneumatique.

La direction radiale est une direction coupant l'axe de rotation du pneumatique et perpendiculaire à celui-ci. La direction radiale est l'intersection entre un plan circonférentiel et un plan radial.

Selon un mode de réalisation préféré de l'invention, la surface apparente de ladite au moins une partie présentant une largeur supérieure à celle d'une incision est inférieure à 75 % de la surface apparente de ladite au moins une incision.

Un pneumatique ainsi réalisé selon l'invention et monté sur la roue d'une motocyclette autorise effectivement, lors de roulage en ligne droite, une mise à plat du pneumatique sans créer de mises en compression excessives des mélanges caoutchouteux constituant la bande de roulement au centre du pneumatique.

Les inventeurs ont mis en évidence que la présence au niveau de la partie centrale de la bande de roulement d'au moins une découpe continue circonférentiellement, formée pour au moins 80 % de sa longueur d'au moins une incision permet d'augmenter l'aire de contact et donc les passages de couples tout en limitant les mises en compression des mélanges caoutchouteux au niveau du plan équatorial du pneumatique lors de roulages en ligne droite.

Selon un mode de réalisation préféré de l'invention, ladite au moins une découpe continue circonférentiellement est constituée d'au moins une partie présentant une largeur supérieure à 2.5 mm.

Au sens de l'invention, la largeur de ladite au moins une partie est égale à la largeur du rectangle circonscrit à ladite au moins une partie, c'est-à-dire du plus petit rectangle contenant ladite au moins une partie en entier.

Selon ce mode de réalisation de l'invention, la découpe continue circonférentiellement au niveau de la partie centrale de la bande de roulement du pneumatique est constituée d'au moins une incision interrompue par au moins une zone de découpe de largeur plus importante et supérieure à 2.5 mm. Conformément à l'invention l'ensemble de ces zones représente au plus 20 % de la longueur de la découpe continue circonférentiellement.

Avantageusement selon l'invention, lesdits au plus 20 % de la découpe présentant une largeur supérieure à 2.5 mm sont constitués de plusieurs parties discontinues. Les inventeurs ont en effet su mettre en évidence qu'une découpe constituée d'une incision présente des zones de fissurations résultant de la fabrication du pneumatique. En effet, les inventeurs ont mis en évidence que des zones de fissurations ou zones présentant des risques de fissuration apparaissent en correspondance des jonctions des secteurs des moules de fabrication. Un moule pour pneumatique est en effet constitué de plusieurs secteurs qui sont assemblés entre eux pour réaliser le moulage du pneumatique lors de l'étape de cuisson ou vulcanisation. Ces parties discontinues présentant une largeur supérieure à 2.5 mm sont ainsi avantageusement prévues au niveau des jonctions des secteurs constituant les moules.

Ladite au moins une découpe continue circonférentiellement est ainsi avantageusement formée pour au moins 5 % de sa longueur d'au moins une partie présentant une largeur supérieure à 2.5 mm. Cette valeur de 5 % correspond sensiblement à la valeur desdites parties nécessaires pour couvrir l'ensemble des jonctions des secteurs constituant le moule de fabrication d'un pneumatique.

Avantageusement encore, chacune des parties présentant une largeur supérieure à 2.5 mm présente une longueur comprise entre 2.5 et 10 mm. La longueur d'une partie est mesurée entre les deux extrémités d'incisions qu'elles relient ; elle est égale à la longueur du rectangle circonscrit à ladite partie tel que défini précédemment. De telles longueurs diminuent la probabilité de voir apparaître des fissures au niveau des mélanges caoutchouteux constituant la bande de roulement.

Avantageusement encore selon l'invention, ces parties présentent une section de type ovale au niveau de la bande de roulement. Les courbures continues sur la section desdites parties contribuent également à diminuer la probabilité de voir apparaître des fissures au niveau des mélanges caoutchouteux constituant la bande de roulement.

Selon d'autres réalisations, la section de ces parties au niveau de la surface de la bande de roulement peut être toute forme géométrique, telles que par exemple des polygones.

Selon une autre formulation de l'invention celle-ci se rapporte à un pneumatique pour véhicule motorisé à deux roues comportant une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement, au moins la partie centrale de la bande de roulement comportant au moins une découpe continue circonférentiellement formant deux parois, ladite découpe étant formée pour au moins 80 % de sa longueur de zones dont les distances entre les parois sont inférieures au tiers de la distance entre les parois d'au plus 20 % de la longueur de ladite découpe et la surface apparente desdites zones formant au moins 80 % de la longueur de ladite découpe étant supérieure à la surface apparente des autres zones formant au plus 20 % de la longueur de ladite découpe.

De préférence, ladite découpe est formée pour au moins 85 % de sa longueur de zones dont les distances entre les parois sont inférieures au tiers de la distance entre les parois d'au plus 15 % de la longueur de ladite découpe

Selon une variante de réalisation de l'invention, lesdits au moins 80 % de la longueur formés d'au moins une incision forment un angle avec la direction circonférentielle sur la surface de la bande de roulement.

Selon cette variante de réalisation de l'invention, les incisions présentent une direction principale qui coupe la direction circonférentielle. De telles incisions favorisent les propriétés d'adhérence du pneumatique sur route mouillée ou humide.

Selon une réalisation préférée de l'invention, les incisions forment un tracé en Z sur le pourtour de la bande de roulement du pneumatique. Ladite au moins une découpe continue circonférentiellement est ainsi constituée d'un ensemble d'incisions, deux incisions successives étant orientées par rapport à la direction circonférentielle en sens opposés. Avantageusement encore, deux incisions successives sont séparées par une partie de découpe présentant une largeur supérieure à 2.5 mm. Ces parties vont permettre encore une fois, y compris lorsque leurs localisations ne correspondent pas à des jonctions de secteurs, de limiter les risques de fissuration au sein des mélanges caoutchouteux de la bande de roulement. En effet, en l'absence de ces parties présentant une largeur supérieure à 2.5 mm, les incisions se rejoindraient en formant un angle susceptible d'initier des amorces de fissures.

Selon un mode de réalisation préféré de l'invention, entre deux parties présentant une largeur supérieure à 2.5 mm, ladite au moins une découpe continue circonférentiellement est constituée d'au moins une courbe sur la surface de la bande de roulement. Selon une telle réalisation, les incisions favorisent encore les propriétés d'adhérence du pneumatique sur route mouillée ou humide.

Une variante avantageuse de l'invention prévoit que la profondeur des incisions varie selon la direction axiale notamment pour tenir compte des vitesses d'usure différentes selon la direction axiale du pneumatique et pour obtenir des rigidités de la bande de roulement variables selon la direction axiale.

Selon une variante avantageuse de l'invention, au moins la surface de la bande de roulement est constituée d'un premier mélange polymérique s'étendant sur au moins une partie de la partie centrale et d'au moins un deuxième mélange polymérique présentant des propriétés physico-chimique différentes de celles dudit premier mélange polymérique et couvrant au moins une partie des parties axialement extérieures de la bande de roulement.

Une telle variante de l'invention autorise la réalisation d'une bande de roulement présentant par exemple des propriétés relatives à l'usure améliorées au centre de la bande de roulement et des propriétés relatives à l'adhérence améliorées sur les parties axialement extérieures.

Une telle variante de réalisation de l'invention propose notamment de faire coïncider une bande de roulement présentant des propriétés relatives à l'usure améliorées avec ladite au moins une découpe continue circonférentiellement.

Selon un mode de réalisation avantageux de l'invention, afin de conférer des propriétés symétriques au pneumatique, la bande circonférentielle centrale est avantageusement centrée sur le plan équatorial. Selon d'autres modes de réalisations, destinés par exemple à des pneumatiques devant rouler sur un circuit comportant des virages essentiellement dans la même direction, la bande circonférentielle centrale peut ne pas être centrée sur le plan équatorial.

Des variantes avantageuses de l'invention peuvent prévoir la présence de cinq bandes circonférentielles ou plus pour former au moins la surface de la bande de roulement et ainsi conférer une évolution graduelle des propriétés de ladite bande de roulement depuis le plan équatorial vers les épaules. De même que précédemment, une telle réalisation peut être symétrique par rapport au plan équatorial ou non, la répartition des bandes différent soit par leur composition soit par leur répartition par rapport au plan équatorial.

Selon un mode de réalisation préféré de l'invention, le deuxième mélange polymérique est d'une composition différente de celle du premier mélange polymérique et de préférence encore, le deuxième mélange polymérique présente des propriétés d'adhérence supérieures à celles dudit premier mélange polymérique.

Selon d'autres modes de réalisations, des propriétés différentes peuvent être obtenues avec des mélanges identiques par des conditions de vulcanisation différentes.

Avantageusement encore, les épaisseurs radiales des premier et deuxième mélanges polymériques peuvent être différentes, de façon à optimiser axialement l'usure de la bande de roulement. Avantageusement encore les épaisseurs varient graduellement.

Selon un mode de réalisation préféré de l'invention, le deuxième mélange polymérique présente une dureté Shore A différente de celle du premier mélange polymérique.

La dureté Shore A des mélanges polymériques après cuisson est appréciée conformément à la norme ASTM D 2240-86.

Selon un mode de réalisation préféré de l'invention, les éléments de renforcement de la structure de renfort de type carcasse font avec la direction circonférentielle un angle compris entre 65° et 90°.

Selon une variante de l'invention, la structure de renforcement de sommet comporte au moins une couche d'éléments de renforcement formant des angles avec la direction circonférentielle compris entre 10 et 80°.

Selon cette variante, la structure de renforcement de sommet comporte avantageusement au moins deux couches d'éléments de renforcement, les éléments de renforcement formant entre eux des angles compris entre 20 et 160°, d'une couche à la suivante, et de préférence supérieurs à 40°.

Selon une réalisation préférée de l'invention, les éléments de renforcement des couches de travail sont en matériau textile.

Selon un autre mode de réalisation de l'invention, les éléments de renforcement des couches de travail sont en métal.

Dans une réalisation avantageuse de l'invention, notamment pour optimiser les rigidités de la structure de renforcement le long du méridien du pneumatique, et en particulier aux bords des couches de travail, les angles formés par les éléments de renforcement des couches de travail avec la direction longitudinale sont variables selon la direction transversale tels que lesdits angles sont supérieurs sur les bords axialement extérieurs des couches d'éléments de renforcement par rapport aux angles mesurés au niveau du plan équatorial du pneumatique.

Une réalisation de l'invention prévoit que le pneumatique est notamment constitué d'une structure de renforcement de sommet qui comporte au moins une couche d'éléments de renforcement circonférentiels ; selon l'invention, la couche d'éléments de renforcement circonférentiels est constituée d'au moins un élément de renforcement orienté selon un angle formé avec la direction longitudinale inférieur à 5°.

De préférence également, les éléments de renforcement de la couche d'éléments de renforcement circonférentiels sont métalliques et/ou textiles et/ou en verre. L'invention prévoit notamment l'utilisation d'éléments de renforcement de natures différentes dans une même couche d'éléments de renforcement circonférentiels.

De préférence encore, les éléments de renforcement de la couche d'éléments de renforcement circonférentiels présentent un module d'élasticité supérieur à 6000 N/mm².

Une variante de réalisation de l'invention prévoit avantageusement que les éléments de renforcement circonférentiels sont répartis selon la direction transversale avec un pas variable.

La variation du pas entre les éléments de renforcement circonférentiels se traduit par une variation du nombre d'éléments de renforcement circonférentiels par unité de longueur selon la direction transversale et en conséquence par une variation de la densité d'éléments de renforcement circonférentiels selon la direction transversale et donc par une variation de la rigidité circonférentielle selon la direction transversale.

D'autres détails et caractéristiques avantageux de l'invention ressortiront ci-après de la description des exemples de réalisation de l'invention en référence aux figures 1 à 4 qui représentent :
- figure 1, une vue partielle en perspective d'un schéma d'un pneumatique selon un premier mode de réalisation de l'invention,
- figure 2, une vue partielle en perspective d'un schéma d'un pneumatique selon un deuxième mode de réalisation de l'invention,
- figure 3, une vue partielle en perspective d'un schéma d'un pneumatique selon un troisième mode de réalisation de l'invention,
- figure 4, une vue partielle du dessus d'un schéma d'un pneumatique selon le troisième mode de réalisation de l'invention.

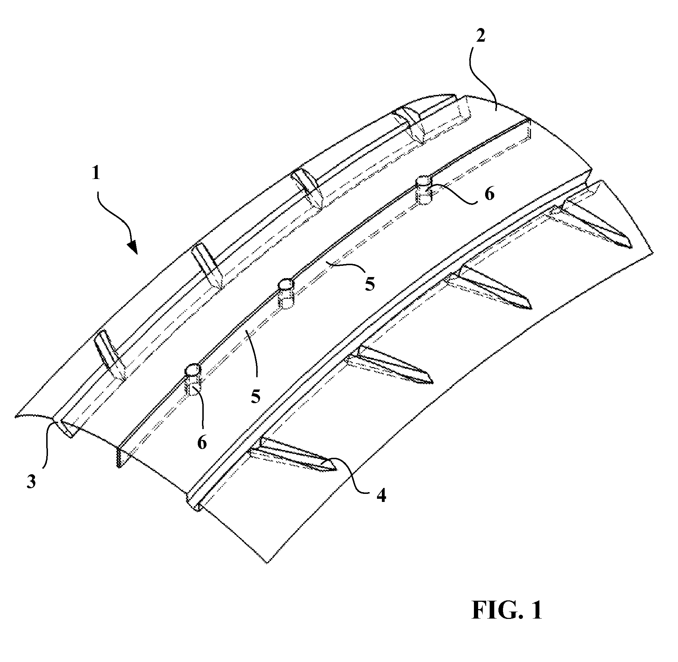

Les figures 1 à 4 ne sont pas représentées à l'échelle pour en simplifier la compréhension.

La figure 1 représente une vue partielle en perspective d'un pneumatique 1, et plus précisément de la surface extérieure 2 de sa bande de roulement, destiné à équiper la roue avant d'une motocyclette. Le pneumatique 1 présente une valeur de courbure supérieure à 0.15 et de préférence supérieure à 0.3. La valeur de courbure est définie par le rapport Ht/Wt, c'est-à-dire par le rapport de la hauteur de la bande de roulement sur la largeur maximale de la bande de roulement du pneumatique.

De manière non représentée sur les figures, le pneumatique 1 comprend une armature de carcasse constituée d'une couche comprenant des éléments de renforcement de type textile. La couche est constituée d'éléments de renforcement disposés radialement. Le positionnement radial des éléments de renforcement est défini par l'angle de pose desdits éléments de renforcement ; une disposition radiale correspond à un angle de pose desdits éléments par rapport à la direction longitudinale du pneumatique compris entre 65° et 90°.

L'armature de carcasse est ancrée de chaque côté du pneumatique 1 dans un bourrelet dont la base est destinée à être montée sur un siège de jante. Chaque bourrelet est prolongé radialement vers l'extérieur par un flanc, ledit flanc rejoignant radialement vers l'extérieur la bande de roulement.

Le pneumatique 1 comporte encore une armature de sommet constituée par exemple de deux couches d'éléments de renforcement faisant des angles avec la direction circonférentielle, lesdits éléments de renforcement étant croisés d'une couche à la suivante en faisant entre eux des angles par exemple de 50° dans la zone du plan équatorial, les éléments de renforcement de chacune des couches formant un angle par exemple égal à 25° avec la direction circonférentiel.

L'armature de sommet peut encore être constituée d'une couche d'éléments de renforcement circonférentiels en lieu et place des couches d'éléments de renforcement faisant des angles avec la direction circonférentielle ou bien combinée à celles-ci.

La bande de roulement 2 du pneumatique 1 comporte une sculpture constituée de rainures continues 3 orientées circonférentiellement et de rainures transversales 4, la direction principale de celles-ci présentant un léger angle avec la direction radiale pour donner une orientation à ladite sculpture.

Conformément à l'invention, la bande de roulement comporte une découpe circonférentielle constituée d'incisions ou fentes 5, dont les largeurs non nulles sont très inférieures à celles des rainures 3 et 4 précédemment citées. Ces incisions 5 sont reliées entres elles par des zones de largeurs plus importantes que l'on peut qualifier de puits 6.

Dans le cas de la figure 1, la découpe circonférentiellement continue constituée des incisions 5 et des puits 6 est sensiblement confondue avec un plan circonférentiel et dans le cas présent le plan équatorial.

La présence des incisions 5 permet lors d'un roulage d'augmenter la mise à plat de la bande de roulement afin d'optimiser l'aire de contact avec le sol. La présence de l'incision permet en outre de diminuer la mise en compression des mélanges caoutchouteux qui constituent la bande de roulement. En outre, la faible distance entre les parois de l'incision permet d'éviter une absence de matière qui diminuerait l'aire de la surface de contact.

Cette aire est toutefois légèrement diminuée par la présence des puits qui eux ne vont pas se refermer totalement au niveau de la surface de la bande de roulement lors de l'écrasement du pneumatique sur le sol. C'est pourquoi ils ne représentent pas plus de 20 % de la longueur de la découpe circonférentiellement continue ; les passages de couples ne sont quasiment pas perturbés par leur présence dans l'aire de contact.

Comme expliqué précédemment, les puits sont avantageusement mis en place au niveau des jonctions de secteurs du moule pour éviter les risques de fissuration. Selon le nombre de secteurs constituant le moule, il est possible de prévoir des puits supplémentaires pour offrir un aspect plus régulier de la surface de la bande de roulement au tour de roue.

La surface apparente de l'ensemble des incisions 5 du pneumatique est égale à 920 mm².

La surface apparente de l'ensemble des puits 6 du pneumatique est égale à 585 mm².

Conformément à l'invention, la surface apparente de l'ensemble des incisions 5 est supérieure à la surface apparente de l'ensemble des puits 6.

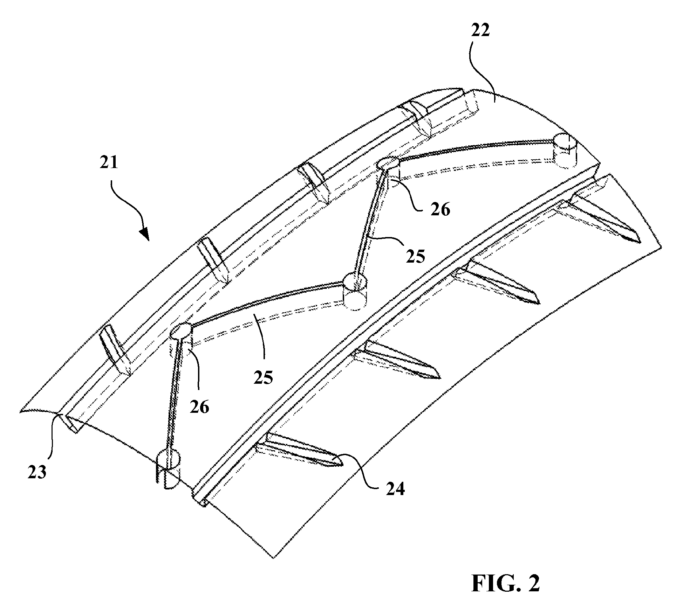

La figure 2 représente une vue partielle en perspective d'un pneumatique 21 semblable à celui de la figure 1 et qui en diffère par une découpe circonférentiellement continue qui présente sur la surface de la bande de roulement 22 une forme en Z, ou plus exactement une successions d'incisions 25 dont l'orientation forme un angle avec la direction circonférentielle et reliées entres elles par des puits 26.

Cette orientation des incisions permet outre leur apport pour la mise à plat du pneumatique dans l'aire de contact de couples de contribuer directement à l'amélioration des propriétés d'adhérence notamment sur sol mouillé.

La présence des puits 26 coïncident avantageusement conformément à l'invention aux zones de jonction des secteurs de moules. Ils sont en outre présents aux extrémités de chacune des incisions pour les relier deux à deux et éviter la présence de liaison directe entre deux incisions qui serait source potentielle d'amorces de fissurations.

La surface apparente de l'ensemble des incisions 25 du pneumatique est égale à 1140 mm².

La surface apparente de l'ensemble des puits 26 du pneumatique est égale à 585 mm².

Conformément à l'invention, la surface apparente de l'ensemble des incisions 25 est supérieure à la surface apparente de l'ensemble des puits 26.

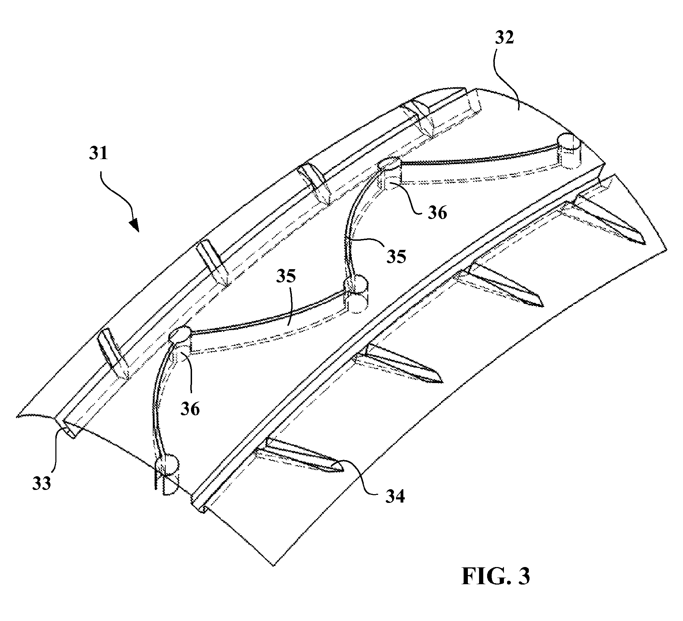

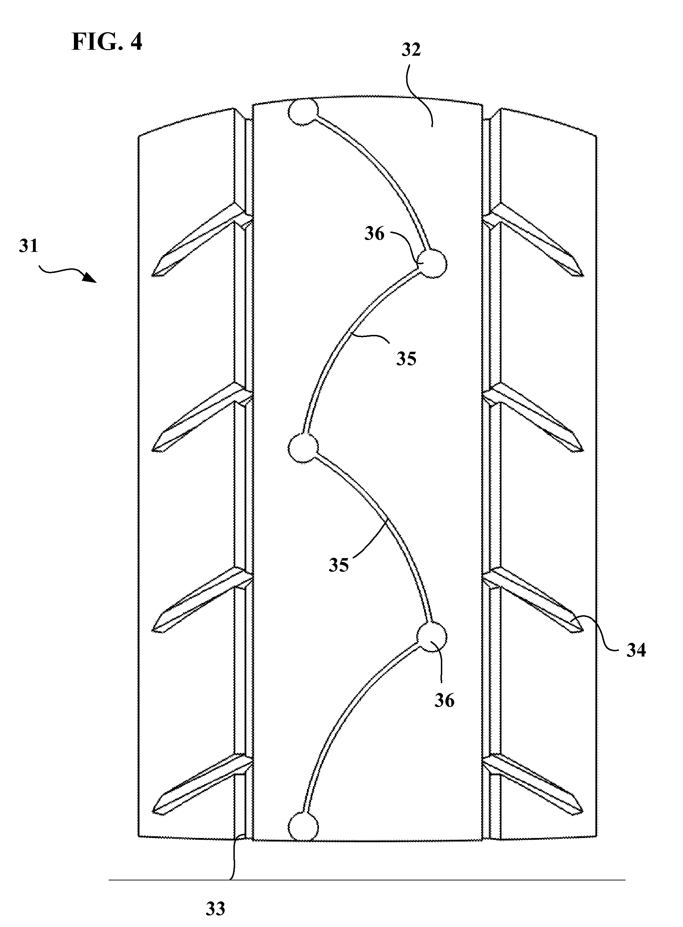

Les figures 3 et 4 représentent respectivement une vue partielle en perspective et une vue partielle du dessus d'un pneumatique 31 qui différent de celui de la figure 2 par des incisions 35 dont le tracé sur la surface de la bande de roulement 32 n'est plus rectiligne mais courbé.

Ce profil courbé des incisions 35 est encore plus favorable à l'amélioration des propriétés d'adhérence notamment sur sol mouillé.

La surface apparente de l'ensemble des incisions 35 du pneumatique est égale à 1180 mm².

La surface apparente de l'ensemble des puits 36 du pneumatique est égale à 585 mm².

Conformément à l'invention, la surface apparente de l'ensemble des incisions 35 est supérieure à la surface apparente de l'ensemble des puits 36.

Des mesures de surface de l'aire de contact ont été réalisées d'une part sur un pneumatique conforme à l'invention telle que représentée sur la figure 1 et d'autre part sur un premier pneumatique de référence R1 de même dimension mais ne comportant pas de découpe circonférentielle continue et sur un deuxième pneumatique de référence R2 comportant une rainure circonférentielle dont la largeur est égale 6.5 mm.

Le pneumatique mesuré est un pneumatique de dimension 180/55 ZR 17, gonflé à 2.5 bars et écrasé sous une charge de 180 daN.

Les valeurs relatives mesurées sont de 100 pour le pneumatique de référence R1, 95 pour le pneumatique de référence R2 et 110 pour le pneumatique selon l'invention.

La découpe circonférentiellement continue selon l'invention permet donc d'augmenter la surface de l'aire de contact et donc est favorable à une meilleure transmission des couples moteurs ou freineur.

La valeur obtenue avec le pneumatique de référence R2 confirme par ailleurs qu'une rainure circonférentielle permet de limiter la mise en compression de la bande de roulement et donc limite les pertes énergétiques mais l'absence de mélange caoutchouteux correspondant à la rainure diminue la surface du pneumatique au contact du sol dans l'aire de contact.

L'invention ne doit pas être comprise comme étant limitée à la description des exemples ci-dessus. L'invention ne doit notamment pas être comprise comme étant limitée au cas d'un pneumatique destiné à équiper la roue arrière d'un véhicule motorisé à deux roues mais présente également un intérêt pour une roue avant.

## Revendications

1. Pneumatique (1-31) pour véhicule motorisé à deux roues comportant une structure de renfort de type carcasse, formée d'éléments de renforcement, ancrée de chaque côté du pneumatique à un bourrelet dont la base est destinée à être montée sur un siège de jante, chaque bourrelet se prolongeant radialement vers l'extérieur par un flanc, les flancs rejoignant radialement vers l'extérieur une bande de roulement (2-32), **caractérisé en ce qu'**au moins la partie centrale de la bande de roulement comporte au moins une découpe continue circonférentiellement, **en ce que** ladite découpe continue circonférentiellement est formée pour au moins 80 % de sa longueur d'au moins une incision (5-35), formée de deux parois, la distance entre lesdites parois mesurée selon la normale à un plan tangent à l'une des parois étant inférieure à 1.5 mm et ladite distance au niveau de la surface de la bande de roulement étant au moins égale à ladite distance au niveau du fond de l'incision, et d'au plus 20% de sa longueur d'au moins une partie (6-36) présentant une largeur supérieure à celle d'une incision et **en ce que** la surface apparente de ladite au moins une incision est supérieure à la surface apparente de ladite au moins une partie présentant une largeur supérieure à celle d'une incision.

2. Pneumatique (1-31) selon la revendication 1, **caractérisé en ce que** la surface apparente de ladite au moins une partie (6-36) présentant une largeur supérieure à celle d'une incision est inférieure à 75 % de la surface apparente de ladite au moins une incision.

3. Pneumatique (1-31) selon l'une des revendications 1 ou 2, **caractérisé en ce que** ladite au moins une découpe continue circonférentiellement est constituée d'au moins une partie (6-36) présentant une largeur supérieure à 2.5 mm.

4. Pneumatique (1-31) selon l'une des revendications 1 à 3, **caractérisé en ce que** ladite au moins une découpe continue circonférentiellement est formée pour au moins 5 % de sa longueur d'au moins une partie (6-36) présentant une largeur supérieure à 2.5 mm.

5. Pneumatique (1-31) selon l'une des revendications 1 à 4, **caractérisé en ce que** lesdits au moins 80 % de la longueur formés d'au moins une incision (5-35) forment un angle avec la direction circonférentielle sur la surface de la bande de roulement.

6. Pneumatique (1-31) selon la revendication 5, la découpe continue circonférentiellement comportant au moins deux parties (6-36) présentant une largeur supérieure à 2.5 mm, **caractérisé en ce que**, entre lesdites au moins deux parties présentant une largeur supérieure à 2.5 mm, ladite au moins une découpe continue circonférentiellement est constituée d'au moins une courbe sur la surface de la bande de roulement.

7. Pneumatique (1-31) selon l'une des revendications précédentes, la bande de roulement comportant au moins une partie centrale et deux parties axialement extérieures, **caractérisé en ce qu'**au moins la surface de la bande de roulement est constituée d'un premier mélange polymérique s'étendant sur au moins une partie de la partie centrale et d'au moins un deuxième mélange polymérique présentant des propriétés physico-chimique différentes de celles dudit premier mélange polymérique et couvrant au moins une partie des parties axialement extérieures de la bande de roulement.

8. Pneumatique (1-31) selon l'une des revendications précédentes, **caractérisé en ce que** les éléments de renforcement de la structure de renfort de type carcasse font avec la direction circonférentielle un angle compris entre 65° et 90°.

9. Pneumatique (1-31) selon l'une des revendications précédentes, **caractérisé en ce que** la structure de renforcement de sommet comporte au moins une couche d'éléments de renforcement, dite couche de travail, et **en ce que** les éléments de renforcement forment des angles avec la direction circonférentielle compris entre 10 et 80°.

10. Pneumatique (1-31) selon la revendication 9, **caractérisé en ce que** les angles formés par les éléments de renforcement de ladite au moins une couche de travail avec la direction longitudinale sont variables selon la direction transversale.

11. Pneumatique (1-31) selon l'une des revendications précédentes, **caractérisé en ce que** la structure de renforcement de sommet comporte au moins une couche d'éléments de renforcement circonférentiels.

12. Pneumatique (1-31) selon la revendication 11, **caractérisé en ce que** les éléments de renforcement circonférentiels sont répartis selon la direction transversale avec un pas variable.

## Patentansprüche

1. Luftreifen (1-31) für zweirädriges Kraftfahrzeug, der eine karkassenartige Verstärkungsstruktur aufweist, die aus Verstärkungselementen gebildet ist und beiderseits des Luftreifens an einem Wulst verankert ist, dessen Basis dazu bestimmt ist, an einem Felgensitz montiert zu werden, wobei jeder Wulst radial auswärts durch eine Seitenfläche verlängert ist, wobei die Seitenflächen radial auswärts mit einem Laufstreifen (2-32) verbunden sind, **dadurch gekennzeichnet, dass** wenigstens der Mittelteil des Laufstreifens wenigstens einen in Umfangsrichtung ununterbrochenen Ausschnitt aufweist, dass der in Umfangsrichtung ununterbrochene Ausschnitt auf wenigstens 80 % seiner Länge aus wenigstens einem Einschnitt (5-35) gebildet ist, der aus zwei Wänden gebildet ist, wobei der Abstand zwischen diesen Wänden gemessen längs der Normalen zu einer Tangentialebene an eine der Wände kleiner als 1,5 mm ist und der Abstand auf Höhe der Oberfläche des Laufstreifens wenigstens gleich diesem Abstand auf Höhe des Bodens des Einschnitts ist, und auf höchstens 20 % seiner Länge aus wenigstens einem Teil (6-36) gebildet ist, der eine Breite aufweist, die größer ist als jene eines Einschnitts, und dass die sichtbare Oberfläche des wenigstens einen Einschnitts größer als die sichtbare Oberfläche des wenigstens einen Teils ist, der eine Breite aufweist, die größer als jene eines Einschnitts ist.

2. Luftreifen (1-31) nach Anspruch 1, **dadurch gekennzeichnet, dass** die sichtbare Oberfläche des wenigstens einen Teils (6-36), der eine Breite aufweist, die größer als jene eines Einschnitts ist, kleiner als 75 % der sichtbaren Oberfläche des wenigstens einen Einschnitts ist.

3. Luftreifen (1-31) nach einem der Ansprüche 1 oder 2, **dadurch gekennzeichnet, dass** der wenigstens eine in Umfangsrichtung ununterbrochene Ausschnitt aus wenigstens einem Teil (6-36), der eine Breite größer als 2,5 mm aufweist, gebildet ist.

4. Luftreifen (1-31) nach einem der Ansprüche 1 bis 3, **dadurch gekennzeichnet, dass** der wenigstens eine in Umfangsrichtung ununterbrochene Ausschnitt auf wenigstens 5 % seiner Länge aus wenigstens einem Teil (6-36) gebildet ist, der eine Breite aufweist, die größer als 2,5 mm ist.

5. Luftreifen (1-31) nach einem der Ansprüche 1 bis 4, **dadurch gekennzeichnet, dass** die wenigstens 80 % der Länge, die durch wenigstens einen Einschnitt (5-35) gebildet sind, mit der Umfangsrichtung auf der Oberfläche des Laufstreifens einen Winkel bilden.

6. Luftreifen (1-31) nach Anspruch 5, wobei der in Umfangsrichtung ununterbrochene Ausschnitt wenigstens zwei Teile (6-36) umfasst, die eine Breite aufweisen, die größer als 2,5 mm ist, **dadurch gekennzeichnet, dass** zwischen den wenigstens zwei Teilen, die eine Breite aufweisen, die größer als 2,5 mm ist, der wenigstens eine in Umfangsrichtung ununterbrochene Ausschnitt aus wenigstens einer Krümmung auf der Oberfläche des Laufstreifens gebildet ist.

7. Luftreifen (1-31) nach einem der vorhergehenden Ansprüche, wobei der Laufstreifen wenigstens einen Mittelteil und wenigstens zwei axial äußere Teile umfasst, **dadurch gekennzeichnet, dass** wenigstens die Oberfläche des Laufstreifens aus einem ersten Polymergemisch, das sich wenigstens über einen Teil des Mittelteils erstreckt, und aus wenigstens einem zweiten Polymergemisch, das andere physikalisch-chemische Eigenschaften als jene des ersten Polymergemisches aufweist und wenigstens einen Teil der axial äußeren Teile des Laufstreifens abdeckt, gebildet ist.

8. Luftreifen (1-31) nach einem der vorhergehenden Ansprüche, **dadurch gekennzeichnet, dass** die Verstärkungselemente der karkassenartigen Verstärkungsstruktur mit der Umfangsrichtung einen Winkel im Bereich von 65° bis 90° bilden.

9. Luftreifen (1-31) nach einem der vorhergehenden Ansprüche, **dadurch gekennzeichnet, dass** die Verstärkungsstruktur am Scheitel wenigstens eine Schicht aus Verstärkungselementen, die Arbeitsschicht genannt wird, umfasst und dass die Verstärkungselemente mit der Umfangsrichtung einen Winkel im Bereich von 10 bis 80° bilden.

10. Luftreifen (1-31) nach Anspruch 9, **dadurch gekennzeichnet, dass** die durch die Verstärkungselemente der wenigstens einen Arbeitsschicht mit der Längsrichtung gebildeten Winkel in Querrichtung variabel sind.

11. Luftreifen (1-31) nach einem der vorhergehenden Ansprüche, **dadurch gekennzeichnet, dass** die Verstärkungsstruktur des Scheitelpunkts wenigstens eine Schicht aus Umfangsverstärkungselementen umfasst.

12. Luftreifen (1-31) nach Anspruch 11, **dadurch gekennzeichnet, dass** die Umfangsverstärkungselemente in Querrichtung mit variabler Schrittweite verteilt sind.

## Claims

1. Tyre (1-31) for a motorized two-wheeled vehicle comprising a reinforcing structure of the carcass type, made up of reinforcing elements, anchored on each side of the tyre to a bead the base of which is intended to be mounted on a rim seat, each bead being extended radially outwards by a sidewall, the sidewalls radially towards the outside joining to a tread (2-32), **characterized in that** at least the central part of the tread comprises at least one circumferentially continuous cut, **in that** the said circumferentially continuous cut is made up, for at least 80% of its length of at least one incision (5-35) formed of two walls, the distance between the said walls measured along the normal to a plane tangential to one of the walls is less than 1.5 mm and the said distance on the surface of the tread being at least equal to the said distance at the bottom of the incision, and at most 20% of its length of at least one part (6-36) having a width greater than that of an incision and **in that** the apparent area of the said at least one incision is greater than the apparent area of the said at least one part having a width greater than that of an incision.

2. Tyre (1-31) according to Claim 1, **characterized in that** the apparent area of the said at least one part (6-36) having a width greater than that of an incision is less than 75% of the apparent area of the said at least one incision.

3. Tyre (1-31) according to one of Claims 1 and 2, **characterized in that** the said at least one circumferentially continuous cut consists of at least a part having a width greater than 2.5 mm.

4. Tyre (1-31) according to one of Claims 1 to 3, **characterized in that** the said at least one circumferentially continuous cut is formed for at least 5% of its length of at least one part (6-36) having a width greater than 2.5 mm.

5. Tyre according to one of Claims 1 to 5, **characterized in that** the said at least 80% of the length which are formed of at least one incision (5-35) make an angle with the circumferential direction on the surface of the tread.

6. Tyre (1-31) according to Claim 6, the circumferentially continuous cut comprising at least two parts (6-36) having a width greater than 2.5 mm, **characterized in that**, between the said at least two parts having a width greater than 2.5 mm, the said at least one circumferentially continuous cut consists of at least one curve on the surface of the tread.

7. Tyre (1-31) according to one of the preceding claims, the tread comprising at least one central part and two axially external parts, **characterized in that** at least the surface of the tread consists of a first polymer compound extending over at least part of the central part and of at least one second polymer compound having physico-chemical properties different from those of the said first polymer compound and covering at least part of the axially external parts of the tread.

8. Tyre (1-31) according to one of the preceding claims, **characterized in that** the reinforcing elements of the carcass-type reinforcing structure make with the circumferential direction an angle of between 65 and 90°.

9. Tyre (1-31) according to one of the preceding claims, **characterized in that** the crown reinforcing structure comprises at least one layer of reinforcing elements , known as the working layer, and **in that** the reinforcing elements make with the circumferential direction angles of between 10 and 80°.

10. Tyre (1-31) according to Claim 9, **characterized in that** the angles made by the reinforcing elements of the said at least one working layer with the longitudinal direction can vary in the transverse direction.

11. Tyre (1-31) according to one of the preceding claims, **characterized in that** the crown reinforcing structure comprises at least one layer of circumferential reinforcing elements.

12. Tyre (1-31) according to Claim 11, **characterized in that** the circumferential reinforcing elements are distributed in the transverse direction at a variable pitch.
